(19) Europäisches Patentamt / European Patent Office / Office européen des brevets

(11) **EP 3 549 739 B1**

(12) **EUROPEAN PATENT SPECIFICATION**

(45) Date of publication and mention
of the grant of the patent:
**23.11.2022 Bulletin 2022/47**

(21) Application number: **17876022.9**

(22) Date of filing: **15.09.2017**

(51) International Patent Classification (IPC):
**B29B 17/00** (2006.01)    **B09B 3/00** (2022.01)
**B09B 5/00** (2006.01)    **C01B 25/32** (2006.01)

(52) Cooperative Patent Classification (CPC):
**B09B 5/00; B09B 3/80; B29B 17/00; C01B 25/32;**
Y02E 50/30

(86) International application number:
**PCT/JP2017/033596**

(87) International publication number:
**WO 2018/100847 (07.06.2018 Gazette 2018/23)**

(54) **METHOD OF RECOVERING URINE-DERIVED NUTRIENT SALTS FROM USED DIAPERS AND THE LIKE**

VERFAHREN ZUR RÜCKGEWINNUNG VON URINNÄHRSALZEN AUS GEBRAUCHTEN WINDELN UND DERGLEICHEN

PROCÉDÉ DE RÉCUPÉRATION DE SELS NUTRITIFS DÉRIVÉS DE L'URINE À PARTIR DE COUCHES UTILISÉES ET ANALOGUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2016 JP 2016232845**

(43) Date of publication of application:
**09.10.2019 Bulletin 2019/41**

(73) Proprietor: **Unicharm Corporation**
**Shikokuchuo-shi, Ehime 799-0111 (JP)**

(72) Inventors:
• **KONISHI, Takayoshi**
**Kanonji-shi**
**Kagawa 769-1602 (JP)**
• **YAMAKI, Koichi**
**Kanonji-shi**
**Kagawa 769-1602 (JP)**
• **ITO, Ryusei**
**Sapporo-shi**
**Hokkaido 060-0808 (JP)**
• **FUNAMIZU, Naoyuki**
**Sapporo-shi**
**Hokkaido 060-0808 (JP)**
• **TSUBOUCHI, Kizuku**
**Sapporo-shi**
**Hokkaido 060-0808 (JP)**

(74) Representative: **Staeger & Sperling**
**Partnerschaftsgesellschaft mbB**
**Sonnenstraße 19**
**80331 München (DE)**

(56) References cited:
JP-A- 2013 150 977    JP-A- 2014 177 399
JP-A- 2015 182 246    JP-A- 2015 182 246
JP-A- 2015 211 941

**Description**

FIELD

The present invention relates to a recycling method for used absorbent articles. More specifically, it relates to a method for recovering urine-derived nutrient salts from used paper diapers and the like.

BACKGROUND

There is a trend toward recovering and reutilizing useful substances from used paper diapers.

For example, Japanese Unexamined Patent Publication No. 2015-182246 (PTL 1) discloses a method for recovering urine-derived nutrient salts from a used absorbent article that contains urine, the method including an inactivating step in which the used absorbent article is immersed in a calcium compound-containing aqueous solution to inactivate the superabsorbent polymer, a separating step in which the mixture of the used absorbent article that has been subjected to the inactivating step and a calcium compound-containing aqueous solution is separated into a solid that includes the constituent materials of the absorbent article and a liquid containing the calcium compounds and nutrient salts, and a nutrient salt recovering step in which nutrient salts are recovered from the liquid containing the calcium compounds and nutrient salts.

[CITATION LIST]

[PATENT LITERATURE]

[PTL 1] Japanese Unexamined Patent Publication No. 2015-182246. Further prior art in this technical field is disclosed in documents JP 2014 177399 A, JP 2015 211941 A and JP 2013 150977 A.

SUMMARY

[TECHNICAL PROBLEM]

This prior art example, however, has been associated with problems, namely: (1) when the superabsorbent polymer that has absorbed urine is treated with the calcium compound-containing aqueous solution in the inactivating step, the hydrophilic groups (-COO$^-$, for example) bond with Ca$^{2+}$, forming -COO-Ca-OCO-, for example, and resulting in crosslinking of the polymer chains and narrowing the intervals between them, so that the urine is discharged; however, components that are approximately 100% urine remain in the gaps of the superabsorbent polymer, making it impossible to efficiently recover the nutrient salts, (2) in the separating step, the fine particulate superabsorbent polymer that is produced from a screen with a size that separates the constituent material-containing solids of the absorbent article fails to be fully separated and instead flows out together with the liquid containing the calcium compounds and nutrient salts, and precipitates, making it impossible to increase the concentration of the nutrient salts in the precipitate, and (3) in the nutrient salt recovering step, the nutrient salts are recovered at a pH of 8 or higher, and therefore the calcium compounds used in the inactivating step precipitate in large amounts, making it impossible to increase the concentration of nutrient salts in the precipitate and preventing efficient reutilization from being achieved.

[SOLUTION TO PROBLEM]

The present invention has been devised in light of these problems associated with prior art methods, and it provides a method for efficiently recovering urine-derived nutrient salts from used paper diapers and urine-absorbing pads.

Specifically, the present invention is a method for recovering urine-derived nutrient salts from a used absorbent article that includes urine, the method including an inactivating step in which a used absorbent article is immersed in a calcium compound-containing aqueous solution to inactivate the superabsorbent polymer, a separating step in which a sieve is used to separate the solid-liquid mixture that has been subjected to the inactivating step, into a first fraction containing the constituent materials of the absorbent article and a second fraction containing an aqueous solution containing the calcium compounds and nutrient salts, or when a precipitate containing nutrient salts has been produced in the inactivating step, into a second fraction containing an aqueous solution containing the calcium compounds and nutrient salts and the precipitate containing the nutrient salts that have passed through the sieve, a precipitation step in which a precipitate containing the nutrient salts is produced by the HAP method, and a concentration step in which the pH of the aqueous solution contacting with the precipitate containing the nutrient salts is adjusted to the range of 5.6 to 7.0, to dissolve at least a portion of the calcium compounds other than hydroxyapatite in the precipitate and increase the hydroxyapatite content in the precipitate.

The present invention encompasses the following embodiment.

[1] A method of recovering a urine-derived nutrient salt from a used absorbent article that includes urine, the method including:

an inactivating step in which a used absorbent article is immersed in a calcium compound-containing aqueous solution to inactivate a superabsorbent polymer,

a separating step in which a sieve is used to separate a solid-liquid mixture that has been subjected to the inactivating step, into a first fraction containing constituent materials of the absorbent article and a second fraction containing an aqueous solution containing a calcium compound and nutrient salt, or when a precipitate containing nutrient salt has been produced in the inactivating step, into a second fraction containing an aqueous solution containing the calcium compound and nutrient salt and the precipitate containing the nutrient salt that have passed through the sieve,

a precipitation step in which a precipitate containing the nutrient salt is produced by HAP method, and

a concentration step in which pH of an aqueous solution contacting with the precipitate containing the nutrient salt is adjusted to a range of 5.6 to 7.0, to dissolve at least a portion of the calcium compound other than hydroxyapatite in the precipitate and increase a hydroxyapatite content in the precipitate.

[2] According to the invention the method according to [1] includes, prior to the inactivating step, a water addition step in which additional water is added to the used absorbent article and the superabsorbent polymer in the used absorbent article is made to further absorb water.

[3] The method according to [2], wherein in the water addition step, 3 to 50 liter of water is added per 1 kg of the used absorbent article.

[4] The method according to [2], wherein the water addition step is a step of immersing the used absorbent article in water.

[5] The method according to any one of [1] to [4], wherein in the separating step, a sieve with a mesh opening of 50 to 300 $\mu$m is used, and at least a portion of the inactivated superabsorbent polymer is separated as the first fraction.

[6] The method according to any one of [1] to [5], wherein an oxidizing agent that disintegrates the superabsorbent polymer is not added before the separating step.

[7] The method according to any one of [1] to [6], wherein the pH during the concentration step is in a range of 5.7 to 6.3.

[ADVANTAGEOUS EFFECTS OF INVENTION]

According to the invention, when recovering urine-derived nutrient salts from a used absorbent article such as a used paper diaper or urine-absorbing pad that contains urine, using the HAP method, it is possible to increase the concentration of nutrient salts in the nutrient salt-containing precipitate that has been obtained by the HAP method.

BRIEF DESCRIPTION OF DRAWINGS

FIG. 1 is a diagram showing the effect of pH on phosphorus concentration in a solid phase (precipitate).
FIG. 2 is a diagram showing the effect of pH on phosphorus concentration in a liquid phase.
FIG. 3 is a graph showing phosphorus concentration in a precipitate, with artificial urine.

DESCRIPTION OF EMBODIMENTS

The present invention relates to a method for recovering urine-derived nutrient salts from a used absorbent article that includes urine.

According to the invention, an "absorbent article" is an absorbent article that can be used for absorption of urine, such as a paper diaper or urine-absorbing pad. The term "absorbent article" generally includes the concept of an absorbent pad comprising an absorbent body made of pulp and a superabsorbent polymer, enveloped by a liquid-permeable sheet. The structure of the absorbent article is not particularly restricted, but a urine-absorbing pad may be, for example, an absorbent body sandwiched between a liquid-permeable sheet and a liquid-impermeable sheet, while a paper diaper may be, for example, an absorbent body sandwiched between a liquid-permeable sheet and a pants-type or open-type outer sheet.

According to the invention, the object to be treated is a used absorbent article that includes urine.

According to the invention, a nutrient salt is a salt containing nitrogen, phosphorus or potassium that can be used as a fertilizer, and more specifically it may be an ammonium salt or phosphate salt.

The method of the invention includes at least the following 4 steps.

(1) An inactivating step in which the used absorbent article is immersed in a calcium compound-containing aqueous solution to inactivate the superabsorbent polymer (hereunder also referred to simply as "inactivating step").

(2) A separating step in which a sieve is used to separate the solid-liquid mixture that has been subjected to the inactivating step, into a first fraction containing the constituent materials of the absorbent article and a second fraction containing an aqueous solution containing the calcium compounds and nutrient salts, or when a precipitate containing nutrient salts has been produced in the inactivating step, into a second fraction containing an aqueous solution containing the calcium compounds and nutrient salts and the precipitate containing the nutrient salts that have passed through the sieve (hereunder also referred to simply as "separating step").

(3) A precipitation step in which a precipitate containing the nutrient salts is produced by the HAP method (hereunder also referred to simply as "precipitation step").

(4) A concentration step in which the pH of the aqueous solution contacting with the precipitate containing the nutrient salts is adjusted to the range of 5.6 to 7.0, to dissolve at least a portion of the calcium compounds other than hydroxyapatite in the precipitate and increase the hydroxyapatite content in the precipitate (hereunder also referred to simply as "concentration step").

The method of the invention also includes the following step.

(5) A water addition step in which, prior to the inactivating step, additional water is added to the used absorbent article and the superabsorbent polymer in the used absorbent article is made to further absorb water (hereunder also referred to simply as "water addition step").

The water addition step is a step in which, prior to the inactivating step, additional water is added to the used absorbent article and the superabsorbent polymer in the used absorbent article is made to further absorb water.

By adding additional water to the used absorbent article that includes urine to cause further absorption of water by the superabsorbent polymer (hereunder also referred to as "SAP") in the used absorbent article, it is possible to lower the concentration of liquid urine components in the superabsorbent polymer. If the inactivating step is carried out after the concentration of liquid urine components in the superabsorbent polymer has been lowered, the concentration of liquid urine components remaining in the inactivated superabsorbent polymer will be lower than the concentration of liquid urine components remaining in an inactivated superabsorbent polymer obtained by the inactivating step without carrying out the water addition step. In other words, carrying out the water addition step before the inactivating step results in an increased amount of urine components being discharged from the superabsorbent polymer by dewatering of the superabsorbent polymer in the inactivating step.

A sodium polyacrylate-based superabsorbent polymer, for example, dissociates sodium ions into a gel, and a large amount of water is drawn in due to the difference in osmotic pressure; however, a higher ion concentration of the solvent results in lower water absorption power. A superabsorbent polymer that has absorbed urine, in a used absorbent article, thus has a lower amount of absorption than when absorbing water. Immersing the used diaper in water, therefore, to add additional water to the used diaper, causes the urine-absorbed superabsorbent polymer to absorb more water and can lower the urine component concentration in the superabsorbent polymer, and can allow reduction in the urine components in the water that resides in the gaps in the inactivated superabsorbent polymer. In other words, it is possible to increase the urine components released from the superabsorbent polymer, and to increase the precipitate that can be recovered as nutrient salts.

The method of adding the additional water to the used absorbent article is not restricted, and it may be a method of pouring water into the used absorbent article, or immersing the used absorbent article in water.

The amount of additional water to be added is preferably 3 to 50 liters and more preferably 10 to 30 liters per 1 kg of used absorbent article. If the amount of water is too little, it will not be possible to adequately absorb water into the superabsorbent polymer, the urine component concentration in the superabsorbent polymer will not be lowered, and some of the urine component will remain in the superabsorbent polymer in the inactivating step, such that the urine component will fail to be efficiently removed. If the amount of aqueous solution is too large, the water-soluble calcium compound may be wasted in the inactivating step, thus increasing treatment cost.

When the used absorbent article is to be immersed in water, it is preferably stirred, although stirring is not essential.

The inactivating step is a step in which the used absorbent article is immersed in a calcium compound-containing aqueous solution to inactivate the superabsorbent polymer.

In this step, the superabsorbent polymer that has swelled by absorption of urine in the used absorbent article is dehydrated by calcium ion, and the urine is discharged from the superabsorbent polymer.

The superabsorbent polymer is a mesh-like polymer chain having hydrophilic groups (for example, $-COO^-$), and widening of the gaps between the polymer chains allows water molecules to be captured in the mesh, the water molecules becoming stabilized by the hydrophilic groups. While this allows a large amount of water to be absorbed, treating the water-absorbed superabsorbent polymer with a calcium compound-containing aqueous solution results in bonding of calcium ions to the hydrophilic groups (such as $-COO^-$) (producing $-COO-Ca-OCO-$, for example), so that the polymer chains become crosslinked and the gaps are narrowed. This presumably causes the water molecules to be discharged, resulting in dehydration of the superabsorbent polymer.

The calcium compound-containing aqueous solution used in the inactivating step is a solution of calcium compounds in water; however, compounds other than calcium compounds may also be dissolved so long as the effect of the invention is not inhibited.

The calcium compounds are not particularly restricted so long as they dissolve in water to produce calcium ions, and examples include calcium chloride, calcium oxide (calcined lime), calcium hydroxide (hydrated lime) and the like. Preferred among these is calcium hydroxide, since it allows inactivation of the superabsorbent polymer and the HAP precipitation step to be accomplished simultaneously.

The calcium compound concentration of the calcium compound-containing aqueous solution is not limited so long as it is a concentration allowing dehydration of the superabsorbent polymer, and it is preferably 5 millimole/liter or greater, more preferably 6 millimole/liter or greater and even more preferably 7 millimole/liter or greater, with the upper limit of the concentration being the saturated solution concentration of the compound. In the case of calcium chloride, the concentration is preferably 5 to 1000 millimole/liter, more preferably 6 to 300 millimole/liter and more preferably 7 to 150 millimole/liter. In the case of calcium oxide, the concentration is preferably 5 to 20 millimole/liter, more preferably 6 to 15 millimole/liter and more preferably 7 to 10 millimole/liter. If the concentration is too low, dehydration of the superabsorbent polymer may be insufficient and the nutrient salt recovery rate will be lowered. If the concentration is too high, conversely, the amount of unreacted calcium adhering to the superabsorbent polymer and pulp after dehydration and being brought out of the system will increase, lowering the utilization efficiency of the calcium compound-containing aqueous solution.

The amount of the calcium compound-containing aqueous solution is not particularly restricted so long as it is an amount allowing complete immersion of the used absorbent articles; however, it is preferably 3 to 50 liter and more preferably 3 to 10 liter per 1 kg of the used absorbent articles. If the amount of aqueous solution is too small, it may not be possible to effectively agitate the used absorbent articles in the aqueous solution. If the amount of aqueous solution is too large, the calcium compound may be wasted, increasing treatment costs.

Stirring is preferably carried out in the inactivating step, although stirring is not essential.

The temperature of the calcium compound-containing aqueous solution is not particularly restricted so long as it is a temperature at which calcium ion is taken up into the superabsorbent polymer; however, it will usually be higher than 0°C and lower than 100°C. Although room temperature is adequate, heating may be performed to increase the reaction rate. In the case of heating, it is preferably from room temperature to 60°C, more preferably from room temperature to 40°C, and even more preferably from room temperature to 30°C.

The time for the inactivating step, i.e. the treatment time for immersion in the calcium compound-containing aqueous solution, is not particularly restricted so long as it is a sufficient time to allow the calcium ion to be taken up into the superabsorbent polymer. The treatment time is preferably 10 minutes or greater, more preferably 20 minutes to 2 hours and even more preferably 40 minutes to 90 minutes. If the treatment time is too short, dehydration of the superabsorbent polymer may be insufficient and the nutrient salt recovery rate may be lowered. If the treatment time exceeds a certain value, the amount of calcium ion taken up into the superabsorbent polymer will become saturated, and therefore any treatment time exceeding that value is meaningless.

According to the invention, an oxidizing agent that disintegrates the superabsorbent polymer is preferably not added before the separating step.

In prior art methods, a large amount of micronized superabsorbent polymer also precipitates in the liquid containing the calcium compound and nutrient salts after the separating step, lowering the hydroxyapatite concentration in the precipitate. During recycling of a used diaper, an oxidizing agent such as sodium hypochlorite is sometimes added for the purpose of sterilization or bleaching; however, the oxidizing agent causes disintegration and micronization of the skeletal structure of the superabsorbent polymer, so that it becomes difficult to remove, and therefore if an oxidizing agent is not added prior to the separating step, the possibility increases that the inactivated superabsorbent polymer will be removed in the separating step in which the solids containing the constituent materials of the absorbent article are removed.

The separating step is a step in which a sieve is used to separate the solid-liquid mixture that has been subjected to the inactivating step, into a first fraction containing the constituent materials of the absorbent article and a second fraction containing an aqueous solution containing the calcium compounds and nutrient salts, or when a precipitate containing nutrient salts has been produced in the inactivating step, into a second fraction containing an aqueous solution containing the calcium compounds and nutrient salts and the precipitate containing the nutrient salts that have passed through the sieve (hereunder also referred to simply as "separating step"). An absorbent article is usually composed of various materials such as pulp, superabsorbent polymers, nonwoven fabrics and plastic films. That is, the "constituent materials" of an absorbent article are various materials such as pulp, superabsorbent polymers, nonwoven fabrics and plastic films. The constituent materials of the absorbent articles may either be broken up into these materials or not yet broken up, at the stage of the separating step. That is, at the stage of the separating step, the constituent materials of the absorbent articles may be in a state in which the forms of the absorbent articles are still maintained.

The separating step is carried out using a sieve. The substances remaining on the sieve are the first fraction, while the substances passing through the sieve are the second fraction.

The separating step is carried out in order to separate the urine components, i.e. nutrient salts that have been discharged for the superabsorbent polymer in the inactivating step, from the used absorbent articles.

When a precipitate containing the nutrient salts has been produced in the inactivating step, the precipitate is also separated as the second fraction. When a precipitate containing the nutrient salts has not been produced in the inactivating step, the second fraction consists only of the aqueous solution.

When the inactivated superabsorbent polymer passes through the sieve, the inactivated superabsorbent polymer is mixed with the nutrient salt-containing precipitate that is to be recovered in the subsequent step, thus lowering the content of nutrient salts in the precipitate. It is therefore preferred to use a sieve having a mesh opening which does not allow passage of the inactivated superabsorbent polymer.

Since superabsorbent polymers used in absorbent articles have large particle sizes of greater than about 300 $\mu$m, and inactivated superabsorbent polymers can also maintain approximately the same particle sizes as before use even without addition of an oxidizing agent, the inactivated superabsorbent polymer can be separated from a mixture of used absorbent articles that have been subjected to an inactivating step and a calcium compound-containing aqueous solution, using a sieve.

Therefore, it is preferred to use a sieve that allows passage of the precipitate containing the nutrient salts, without allowing passage of the inactivated superabsorbent polymer. Specifically, the mesh opening of the sieve is preferably 50 to 300 $\mu$m and more preferably 100 to 200 $\mu$m. If the sieve mesh opening is large, the capture rate of the inactivated superabsorbent polymer may be reduced, and if it is too small, the particle sizes of the precipitate containing the nutrient salts will be several $\mu$m in size, potentially resulting in their capture. By using a sieve having the mesh opening mentioned above, it is possible to remove the inactivated superabsorbent polymer from the aqueous solution containing the nutrient salts, so that the concentration of nutrient salts in the precipitate is further increased, thus facilitating reutilization.

The separating step may be carried out using a single type of sieve, or it may be carried out using two or more different types of sieves with different mesh openings. When two or more different types of sieves with different mesh openings are used, first the first sieve with the lager mesh opening is used to separate the relatively large materials such as nonwoven fabric and plastic film among the constituent materials of the absorbent article, and then a sieve with a mesh opening of 50 to 300 $\mu$m is used to separate the inactivated superabsorbent polymer. The mesh opening of the first sieve may be larger than 300 $\mu$m.

The precipitation step is a step in which a precipitate containing the nutrient salts is produced by the HAP method.

The HAP method is a method for recovering phosphorus utilizing the phenomenon of crystallizing hydroxyapatite ($Ca_{10}(PO_4)_6(OH)_2$) produced by reaction between $PO_4^{3-}$, $Ca^{2+}$ and $OH^-$ in solution. The reaction formula for this is as follows.

$$10Ca^{2+} + 2OH^- + 6PO_4^{3-} \rightarrow Ca_{10}(PO_4)_6(OH)_2 \quad (1)$$

In the HAP method, $Ca^{2+}$ and $OH^-$ are added to a phosphorus-containing aqueous solution, which is contacted with seed crystals in a supersaturated state (metastable zone), crystallizing the hydroxyapatite on the seed crystal surfaces and allowing the phosphorus in the solution to be recovered. The seed crystals used may be phosphorus ore, bone coal or calcium silicate hydrate.

While $Ca^{2+}$ and $OH^-$ are added to a phosphorus-containing aqueous solution in the HAP method, $Ca^{2+}$ is already present in the solution to be treated by the method of the invention, which is convenient as it is not necessarily essential to add fresh $Ca^{2+}$.

In this method, it is necessary for the $Ca^{2+}$ concentration to be 5 millimole/liter or greater and the pH to be 8 or higher, and more preferably the $Ca^{2+}$ concentration is 10 millimole/liter or greater and the pH is 9 or higher.

The $Ca^{2+}$ concentration and pH of the aqueous solution of the second fraction is adjusted to conditions conducive to hydroxyapatite production, to precipitate the phosphorus in the aqueous solution as hydroxyapatite.

The precipitating step may also be carried out simultaneously with the inactivating step. That is, the inactivating step and the precipitating step may be carried out as a single step. By adjusting the environment in the inactivating step ($Ca^{2+}$ concentration, pH, etc.) to an environment satisfying conditions for crystallization of hydroxyapatite, it is possible to produce a precipitate containing hydroxyapatite, while simultaneously inactivating the superabsorbent polymer. In this case it will not be necessary to provide a separate precipitating step.

The concentration step is a step in which the pH of the aqueous solution contacting with the precipitate is adjusted to the range of 5.6 to 7.0, to dissolve at least a portion of the calcium compounds other than hydroxyapatite in the precipitate and increase the hydroxyapatite content in the precipitate.

When a precipitating step is provided separate from the inactivating step, the pH of the solid-liquid mixture after the precipitating step is adjusted to the range of 5.6 to 7.0, and when the inactivating step and the precipitating step are carried out as a single step, the pH of the second fraction is adjusted to that range.

By adjusting the pH of the aqueous solution contacting the precipitate to the range of 5.6 to 7.0, the calcium compounds with low solubility such as calcium hydroxide or calcium carbonate, derived from the calcium compound-containing aqueous solution used in the inactivating step, can be removed from the precipitate as highly-soluble compounds, and the nutrient salt concentration in the precipitate can be further increased. If the pH is higher than 7.00, virtually none of the calcium salts will dissolve and the nutrient salt (hydroxyapatite) concentration of the precipitate will fail to increase, while if it is lower than pH 5.6, half of the hydroxyapatite (nutrient salt) will dissolve, resulting in lower recovery of the nutrient salts in the precipitate. A more preferred pH range is 5.7 to 6.3. At a pH of up to 6.3, all of the calcium carbonate, which is the major component of the calcium salts, will dissolve and be removed from the precipitate, and at a pH of 5.7 or higher, dissolution of the hydroxyapatite (nutrient salt) can be almost entirely suppressed, and therefore the nutrient salt concentration of the precipitate can be increased and more nutrient salt can be recovered.

The phosphorus element concentration of the precipitate is preferably increased to the phosphorus element content of phosphorus ore (13 to 17.5%). At a content equivalent to phosphorus ore, it may be used in various products by the same methods and processes as for phosphorus ore.

In the method of the invention, the aqueous solution containing calcium compounds and nutrient salts obtained in the separating step may be repeatedly used as the calcium compound-containing aqueous solution in the inactivating step. Repeated use makes it possible to concentrate the urine-derived nutrient salts in the aqueous solution containing the calcium compounds and nutrient salts. Concentrating the nutrient salts improves the nutrient salt recovery efficiency.

Here, "repeated use" means using the aqueous solution containing calcium compounds and nutrient salts obtained in the separating step at least once, and preferably several times in repetition, as the calcium compound-containing aqueous solution in the inactivating step. The number of repeated uses is not particularly restricted; however, the use is preferably repeated until the concentration of urine-derived nutrient salts in the aqueous solution containing the calcium compounds and nutrient salts reaches a concentration that allows or facilitates recovery of the nutrient salts in the subsequent nutrient salt recovering step. The number of repeated uses is preferably a larger number from the viewpoint of concentration of the nutrient salts.

The amount of calcium in the calcium compound-containing aqueous solution must be at least 4 millimole per 1 g of inactivated superabsorbent polymer, regardless of the number of repetitions, and the concentration is preferably a constant 4 millimole/liter or greater.

When the aqueous solution containing the calcium compounds and nutrient salts obtained in the separating step is used repeatedly as a calcium compound-containing aqueous solution in the inactivating step, calcium ions are taken up into the superabsorbent polymer and the calcium compounds in the calcium compound-containing aqueous solution are consumed, thus gradually lowering the calcium compound concentration of the calcium compound-containing aqueous solution. Thus, in order to keep the calcium compound concentration of the calcium compound-containing aqueous solution at a minimum necessary calcium compound concentration for inactivation, it is preferred to add a calcium compound to the repeatedly used aqueous solution containing the calcium compounds and nutrient salts.

The calcium compound concentration necessary for inactivation referred to here is not limited so long as it is a concentration allowing inactivation of the superabsorbent polymer, and it is preferably 5 millimole/liter or greater, more preferably 6 millimole/liter or greater and even more preferably 7 millimole/liter or greater, with the upper limit of the concentration being the saturated solution concentration of the compound.

The method of adding the calcium compound is not restricted, and for example, a solid calcium compound may be directly loaded into and dissolved in the aqueous solution containing the calcium compounds and nutrient salts, or a concentrated aqueous solution of the calcium compound may be mixed with the aqueous solution containing the calcium compounds and nutrient salts.

Repeated use of the aqueous solution containing the calcium compounds and nutrient salts, as explained above, assumes a mode in which the method is carried out as a batch process; however, it may also be carried out as a continuous process instead of repeated use in a batch process. When carried out as a continuous process, a portion of the aqueous solution containing the calcium compounds and nutrient salts obtained in the separating step may be circulated to the inactivating step as a calcium compound-containing aqueous solution, while the calcium compound-containing aqueous solution is freshly supplied to the inactivating step in an amount necessary to replenish the calcium compound that has been consumed by inactivation of the superabsorbent polymer. The calcium compound concentration of the calcium compound-containing aqueous solution in the inactivating step can be controlled by varying the circulating ratio of the aqueous solution containing the calcium compounds and nutrient salts obtained in the separating step to the inactivating step (the ratio of the amount of circulation to the inactivating step and the amount transferred to the nutrient salt recovering step), and the calcium compound concentration of the calcium compound-containing aqueous solution freshly supplied to the inactivating step.

The method of the invention may also include a disintegration step in which physical force is allowed to act on the used absorbent article to disintegrate the used absorbent article into its constituent materials (hereunder also referred to simply as "disintegration step").

Absorbent articles are usually composed of various materials such as pulp fiber, superabsorbent polymers, nonwoven fabrics and plastic. In the disintegration step, the used absorbent articles are disintegrated into each of these materials. The degree of disintegration does not need to be complete and may be only partial.

Examples for the method of applying physical force to the used absorbent articles, without being limitative, include agitation, beating, puncturing, vibration, tearing, cutting, crushing or the like. Agitation in water is preferred among these methods. The agitation may be carried out in a vessel equipped with a stirrer, such as a washing machine. The agitation conditions are not particularly restricted so long as the absorbent articles are disintegrated, and for example, the agitation time is preferably 5 to 60 minutes, more preferably 10 to 50 minutes and even more preferably 20 to 40 minutes.

The disintegration step may be carried out before the inactivating step or after the inactivating step, or even simultaneously with the inactivating step. For example, the used absorbent articles may be torn and the absorbent body and other materials disintegrated, and the disintegrated absorbent body or the disintegrated absorbent body and other materials may be treated with an aqueous solution of a water-soluble calcium compound.

In addition, the disintegration step may be carried out separately from the inactivating step, or the inactivating step and the disintegration step may be carried out as a single step. That is, instead of carrying out the inactivating step and disintegration step separately, a single inactivation/disintegration step may be provided for simultaneous inactivation and disintegration. For example, the used absorbent articles, calcium compound and water may be loaded into a washing machine, and agitation applied to an extent such that the used absorbent articles disintegrate, thereby allowing simultaneous inactivation of the superabsorbent polymer and disintegration of the used absorbent articles.

The method of the invention may further include a pulp recovery step in which pulp is separated and recovered in a reusable form from the solid containing the constituent materials of the absorbent articles that has been obtained from the separating step (hereunder also referred to as "pulp recovery step").

In the pulp recovery step, the pulp in the solid containing the constituent materials of the absorbent articles, that has been obtained in the separating step, is separated. The method of separating the pulp, without being limitative, may be, for example, a method in which the difference in specific gravity of the disintegrated constituent materials (pulp, superabsorbent polymer, plastic, etc.) is utilized for precipitating separation in water, a method in which the disintegrated constituent materials of different sizes are separated by passing them through a screen with a prescribed mesh, or a method of separation with a cyclone-type centrifugal separator.

Depending on the purpose of use, the separated pulp may be reused directly, or when it is to be reused in an absorbent article for a paper diaper or the like, it may be subjected to disinfection or citric acid treatment if necessary.

Disinfection may be carried out by treatment of the material to be disinfected using a disinfectant. For example, it may be carried out by loading the material to be disinfected and the disinfectant into a vessel and causing agitation. The disinfectant, without being limitative, may be an aqueous solution dissolving a disinfectant such as sodium hypochlorite or chlorine dioxide, or ozone water, electrolytic water (acidic electrolytic water) or the like, among which an aqueous sodium hypochlorite solution is preferred from the viewpoint of economy and general utility.

In the pulp recovery step, the separated pulp is preferably treated with an aqueous citric acid solution at an acidic pH. Treatment with an aqueous citric acid solution can remove the calcium compounds remaining in the pulp. Treatment with the calcium compound in the inactivating step causes adhesion of calcium ions and various calcium compounds on the surface of the separated pulp. The calcium compounds adhering to the pulp are not necessarily limited to water-soluble compounds and include insoluble and poorly soluble compounds, which cannot be removed by rinsing alone. Citric acid forms a chelate with calcium resulting in water-soluble calcium citrate, and can therefore effectively dissolve and remove insoluble or poorly soluble calcium compounds adhering to the surface of the pulp. Since citric acid can also form chelates with metals other than calcium, when insoluble or poorly soluble metal compounds other than calcium compounds are adhering to the surface of the pulp, it is possible to dissolve and remove not only the calcium compounds but also the insoluble or poorly soluble metal compounds other than the calcium compounds. This can reduce the ash content of the recycled pulp that is obtained, allowing the pulp to be recovered in a reusable manner.

The concentration of the aqueous citric acid solution used in the citric acid treatment is not particularly restricted so long as it is a concentration that allows adjustment to the prescribed pH and can adequately reduce the ash content; however, it is preferably 5 to 250 mol/m$^3$.

The citric acid treatment is carried out at an acidic pH. That is, the acid treatment is carried out at a pH of lower than 7. The pH in the citric acid treatment is preferably 2 to 6, more preferably 2 to 4.5, even more preferably 2 to 3.5 and yet more preferably 2 to 3. If the pH is too low, the water absorption factor of the pulp may be lowered. If only the ash content is a concern, the obtained recycled pulp will be reusable as sanitary goods even with a low pH; however, when the water absorption factor is also a consideration, the pH is preferably 2 or higher. If the pH is too high, the ash content of the pulp will increase, tending to lower the water absorption factor.

The citric acid treatment is carried out after having separated the pulp from the solid containing the constituent materials of the absorbent articles. If citric acid treatment is carried out at a stage in which the inactivated superabsorbent polymer has not yet been separated, then the superabsorbent polymer will reabsorb water and the treatment efficiency will be reduced.

The citric acid-treated pulp is preferably rinsed with water in the rinsing step.

The washed pulp may also be dehydrated if necessary.

The separated pulp fibers may be dried if necessary.

The recovered pulp is preferably worked into a form such as a sheet, roll or mass, that can be easily managed in the production equipment for sanitary goods, and reused.

The method of the invention may further include a superabsorbent polymer recovery step in which the superabsorbent polymer is separated and recovered in a reusable manner (hereunder also referred to simply as "superabsorbent polymer recovery step").

In the superabsorbent polymer recovery step, the inactivated superabsorbent polymer is separated from the first fraction obtained in the separating step, or from the solid-liquid mixture that has been subjected to the inactivating step. Examples for the method of separating the inactivated superabsorbent polymer from the first fraction include, without being limitative, a method in which the difference in specific gravity of the disintegrated constituent materials (pulp, superabsorbent polymer, plastic, etc.) is utilized for precipitating separation in water, a method in which the disintegrated constituent materials of different sizes are separated by passing them through a screen with a prescribed mesh, and a method of separation with a cyclone-type centrifugal separator. In the method of separating the inactivated superabsorbent polymer from the solid-liquid mixture that has been subjected to the inactivating step, as a non-limitative example, first two types of sieves with mesh openings that allow the inactivated superabsorbent polymer to pass without allowing the relatively large materials such as nonwoven fabric and plastic film to pass, are used with the first sieve having a larger mesh opening being used first, to remove the relatively large materials such as nonwoven fabric and plastic film from the solid-liquid mixture, among the constituent materials of the absorbent articles, after which a sieve with a mesh opening that allows passage of the precipitate containing nutrient salts without allowing passage of the inactivated superabsorbent polymer, is used for separation of the inactivated superabsorbent polymer.

The separated superabsorbent polymer is inactivated and therefore cannot be reused as is. It is necessary to restore the water-absorbing power of the superabsorbent polymer. Examples for the method of restoring the water-absorbing power of the inactivated superabsorbent polymer, without being limitative, include a method in which the inactivated superabsorbent polymer is treated with an acid to dissociate the calcium ion bonded to the superabsorbent polymer from the superabsorbent polymer, and then the acid-treated superabsorbent polymer is treated with an alkali, and a method in which the inactivated superabsorbent polymer is treated with an aqueous alkali metal salt solution. A method of treatment with an aqueous alkali metal salt solution is preferred since it does not use an acid or alkali.

Alkali metal salts to be used in the method of treating the separated superabsorbent polymer with an aqueous alkali metal salt solution include water-soluble salts of lithium, sodium, potassium, rubidium and cesium. Preferred alkali metal salts include sodium chloride, potassium chloride, sodium nitrate, potassium nitrate, sodium sulfate and potassium sulfate, among which sodium chloride and potassium chloride are preferred. The amount of alkali metal salt is preferably 20 millimole or greater, more preferably 30 to 150 millimole and even more preferably 40 to 120 millimole, per 1 g (dry mass) of superabsorbent polymer. The concentration of the alkali metal salt in the aqueous alkali metal salt solution is not particularly restricted so long as it is a concentration allowing the polyvalent metal ion to be dissociated from the superabsorbent polymer; however, it is preferably 20 millimole/liter or greater, more preferably 30 to 150 millimole/liter and even more preferably 40 to 120 millimole/liter. The superabsorbent polymer treated by the aqueous alkali metal salt solution is washed with water if necessary. By then drying the superabsorbent polymer that has been treated with the aqueous alkali metal salt solution and washed with water if necessary, it is possible to recover the superabsorbent polymer in a reusable form.

The method of the invention may further include a plastic recovery step in which plastic is further separated from the first fraction obtained by the separating step, and converted as a solid to fuel (hereunder referred to as "plastic recovery step").

In the plastic recovery step, the plastic in the first fraction obtained by the separating step is separated. Examples for the method of separating plastic include, without being limitative, a method in which the difference in specific gravity of the disintegrated constituent materials (pulp, superabsorbent polymer, plastic, etc.) is utilized for precipitating separation in water, a method in which the disintegrated constituent materials of different sizes are separated by passing them through a screen with a prescribed mesh, and a method of separation with a cyclone-type centrifugal separator.

The separated plastic may be converted as a solid to fuel for recycling. The solid fuel conversion may be carried out by the RPF conversion method.

EXAMPLES

[Analysis of precipitate containing nutrient salts, recovered by prior art method]

A precipitate containing nutrient salts was recovered by the method described in PTL 1. Specifically, the precipitate containing nutrient salts was sampled in the following manner.

Sodium hypochlorite was added at 250 ppm to 1,000 liter of a 175 millimole/liter aqueous solution of calcium hydroxide, 300 kg of used diapers were added and the mixture was stirred for 40 minutes. Next, the solids including pulp, superabsorbent polymer, nonwoven fabric and plastic, as constituent materials of the diapers, were separated from the nutrient salt-containing liquid using a 300 $\mu$m mesh sieve, and the liquid was filtered with a membrane filter having a 0.45 $\mu$m pore diameter, to obtain a precipitate.

The obtained precipitate was analyzed as follows.

Ca: Calcium (measured by ICP-AES)
OC: Organic carbon (excluding IC from the carbon observed as $CO_2$ during combustion)
IC: Inorganic carbon (carbon resulting from dissolution of precipitate in acid, corresponding to carbonic acid)
O(OC): Oxygen in organic material (excluding oxygen observed as IC, $PO_4$, $SO_4$, from oxygen observed as $CO_2$ or $H_2O$ during combustion)
O(IC): Oxygen where IC is assumed to be $CO_3$, calculated based on 3 mol of O with respect to 1 mol of IC.
$PO_4$: Phosphate ion (All phosphorus measured by ICP-AES assumed to be phosphate ion)
Mg: Magnesium (measured by ICP-AES)
$SO_4$: Sulfate ion (All sulfur measured by ICP-AES assumed to be sulfate ion)
H: Hydrogen (hydrogen observed as $H_2O$ during combustion)
Na: Sodium (measured by ICP-AES)
K: Potassium (measured by ICP-AES)

As a result of the analysis, the precipitate composition was Ca: 32.12 mass%, OC: 11.70 mass%, IC: 6.55 mass%, O(OC): 10.40 mass%, O(IC): 26.20 mass%, $PO_4$: 1.60 mass%, Mg: 0.98 mass%, $SO_4$: 2.72 mass%, H: 3.33 mass%, Na: 1.64 mass%, N: 0.65 mass%, K: 0.17 mass%, Unidentified: 1.94 mass%.

Estimation of the compounds in the precipitate based on the analysis results was $CaCO_3$: 50.5 mass%, SAP: 29.6 mass%, $Ca(OH)_2$: 7.9 mass%, $MgCO_3$: 3.4 mass%, hydroxyapatite: 2.8 mass%, Other: 5.7 mass%.

In other words, the precipitate containing the nutrient salts recovered by the prior art method contained calcium carbonate (50.5 mass%) or calcium hydroxide (7.9 mass%) deriving from the calcium compound-containing aqueous solution used in the inactivating step, and a large amount of inactivated superabsorbent polymer (29.6 mass%) deriving from the used absorbent article, as an impurity, with 2.8 mass% of hydroxyapatite as a nutrient salt, and therefore efficient reutilization was clearly difficult.

In the experiment, 16.1 g of precipitate was obtained per 1 kg of used diapers. The recovered $PO_4$ was therefore 0.26 g per 1 kg of used diapers.

[Water addition step]

The following experiment was conducted to confirm the effect of adding additional water to the used absorbent articles prior to the inactivating step.

After absorbing 30 mL of artificial urine into 1 g of a superabsorbent polymer ("AQUA KEEP" by Sumitomo Seika Chemicals Co., Ltd.), to model a urine-absorbed superabsorbent polymer of a used diaper, and then immersing the artificial urine-absorbed superabsorbent polymer in water until sufficient absorption of the water, and subsequently immersing the superabsorbent polymer in water and adding 20 millimole, 25 millimole or 30 millimole of calcium hydroxide to the water to inactivate the superabsorbent polymer, the amounts of phosphorus component, as the starting material for hydroxyapatite, were measured in the washing water containing urine discharged from the superabsorbent polymer, in the superabsorbent polymer, and in the precipitate other than the superabsorbent polymer. The composition of the artificial urine used is shown in Table 1.

Also, following the method of the prior art example, 20 millimole, 25 millimole or 30 millimole of calcium hydroxide was dissolved in 1 liter of water as washing water and added to artificial urine-absorbed superabsorbent polymer for inactivation, and the amounts of phosphorus component were measured in the washing water that contained urine discharged from the superabsorbent polymer, in the precipitate other than the superabsorbent polymer, and in the superabsorbent polymer. The results are shown in Table 2.

[Table 1]

Table 1 Artificial urine composition and preparation method

| Solution No. | Compound | Capacity (g/L) |
|---|---|---|
| 1 | $MgCl_2 \cdot 6H_2O$ | 0.65 |
| | NaCl | 4.6 |
| | $Na_2SO_4$ | 2.3 |
| | $Na_3(C_6H_5O_7) \cdot 2H_2O$ | 0.764 |
| | KCl | 1.6 |
| | $C_4H_7N_3O$ | 1.09 |
| 2 | $CaCl_2 \cdot 2H_2O$ | 0.647 |
| | $KH_2PO_4$ | 4.2 |
| | $NH_4Cl$ | 1 |
| | $(NH_2)_2CO$ | 25 |
| 3 | $Na_2(COO)_2$ | 0.02 |
| \*Purified water was prepared in an amount of 600 mL for solution 1 and 100 mL for solutions 2 and 3, and the corresponding reagents were added.<br>\*After preparing each solution, it was thoroughly mixed and purified water was added to a total volume of 1000 mL. | | |

[Table 2]

Table 2

| $Ca(OH)_2$ addition | 20 mmol | | 25 mmol | | 30 mmol | |
|---|---|---|---|---|---|---|
| Additional water added before inactivation | Yes | No | Yes | No | Yes | No |
| Phosphorus in artificial urine absorbed in SAP (g) | 0.029 | 0.029 | 0.029 | 0.029 | 0.029 | 0.029 |
| After inactivation | | | | | | |
| Phosphorus in aqueous solution (g) | 0.001 | 0.000 | 0.001 | 0.001 | 0.001 | 0.001 |
| Phosphorus in precipitate other than SAP (g) | 0.025 | 0.023 | 0.024 | 0.021 | 0.024 | 0.020 |
| Phosphorus in SAP (g) | 0.003 | 0.006 | 0.003 | 0.006 | 0.003 | 0.006 |

From Table 2 it is seen that allowing the superabsorbent polymer to absorb additional water prior to the inactivating step can reduce the amount of phosphorus remaining in the superabsorbent polymer after inactivation. That is, by carrying out the water addition step before the inactivating step, it is possible to efficiently discharge the urine components in the superabsorbent polymer.

[Separation of inactivated superabsorbent polymer by sieve]

After absorbing 70 mL of water into 1 g of superabsorbent polymer ("AQUA KEEP" by Sumitomo Seika Chemicals Co., Ltd.), it was loaded into 100 mL of a 5.6 g/L aqueous solution of calcium chloride and inactivated. The solid-liquid mixture containing the inactivated superabsorbent polymer was passed through sieves with mesh openings of 0.037 mm, 0.074 mm, 0.105 mm, 0.42 mm and 0.71 mm, and the amounts of superabsorbent polymers passing through the sieves were measured. The results are shown in Table 3.

[Table 3]

Table 3

| Sieve mesh opening (mm) | Loaded SAP amount (g) | Amount of SAP under sieve (g) | Percentage passing through sieve (%) |
|---|---|---|---|
| 0.037 | 1.00 | 0.0026 | 0.26 |
| 0.074 | 1.00 | 0.0110 | 1.10 |
| 0.105 | 1.00 | 0.0098 | 0.98 |
| 0.42 | 1.00 | 0.0886 | 8.86 |
| 0.71 | 1.00 | 0.7613 | 76.13 |

Table 3 shows that an inactivated superabsorbent polymer can be separated by sieves having mesh openings of 0.037 to 0.105 mm

[Effect of pH on phosphorus concentration in precipitate]

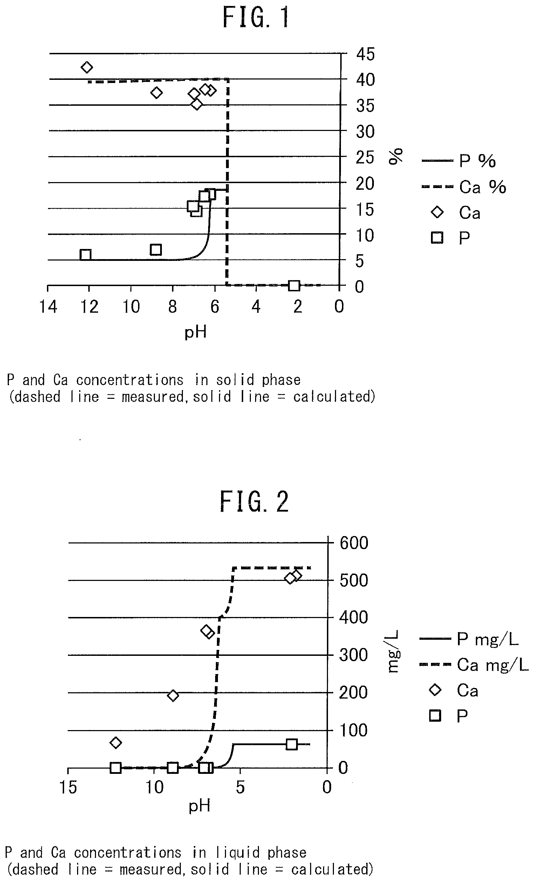

A 13 millimole portion of $Ca(OH)_2$ was added to 1 liter of 15-fold diluted artificial urine to produce a precipitate. The pH during precipitation was 12.2. Hydrochloric acid was added to adjust the pH, and the phosphorus and calcium concentrations in the solid phase (precipitate) and liquid phase were measured at different pH. The results are shown in Figs. 1 and 2.
From Fig. 1 and Fig. 2 it is seen that adjustment of the pH can increase the phosphorus concentration in the precipitate.

[Phosphorus concentration in precipitate with artificial urine]

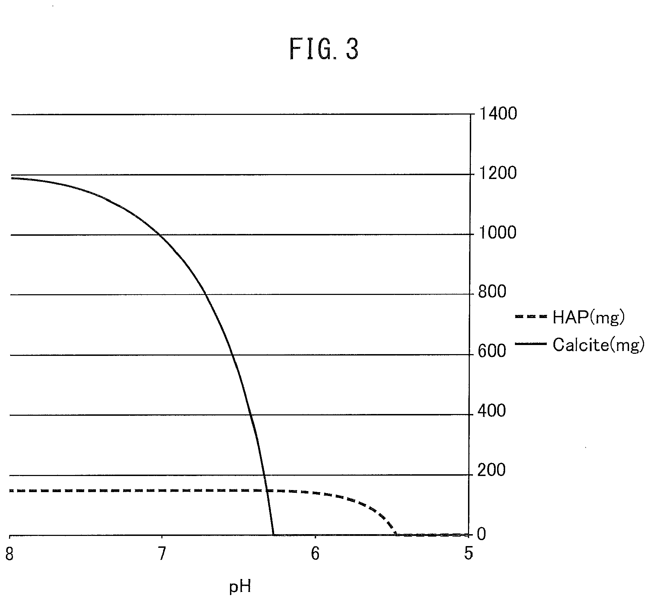

The program "phreeqc" (Parkhurst, D.L. and Appelo, C.A.J., 2013, Description of input and examples for PHREEQC version 3--A computer program for speciation, batch-reaction, one-dimensional transport and inverse geochemical calculations: U.S. Geological Survey Techniques and Methods, book 6, chap. A43, 497 p.) was used to calculate the amount of precipitate with addition of HCl to a prescribed amount of the precipitate. The calculation results were plotted as shown in Fig. 3.
Fig. 3 shows that adjustment of the pH in the range of 5.6 to 7.0 can increase the phosphorus concentration in the precipitate.

INDUSTRIAL APPLICABILITY

The method of the invention can be suitably used to recover urine-derived nutrient salts from used paper diapers and the like.

**Claims**

1. A method of recovering a urine-derived nutrient salt from a used absorbent article that includes urine, the method including:

an inactivating step in which a used absorbent article is immersed in a calcium compound-containing aqueous solution to inactivate a superabsorbent polymer,
a separating step in which a sieve is used to separate a solid-liquid mixture that has been subjected to the inactivating step, into a first fraction containing constituent materials of the absorbent article and a second fraction containing an aqueous solution containing a calcium compound and nutrient salt, or when a precipitate containing nutrient salt has been produced in the inactivating step, into a second fraction containing an aqueous solution containing the calcium compound and nutrient salt and the precipitate containing the nutrient salt that have passed through the sieve,

a precipitation step in which a precipitate containing the nutrient salt is produced by HAP method, the HAP method being a method for recovering phosphorus utilizing the phenomenon of crystallizing hydroxyapatite ($Ca_{10}(PO_4)_6(OH)_2$) produced by reaction between $PO_4^{3-}$, $Ca^{2+}$ and $OH^-$ in solution, and

a concentration step in which pH of an aqueous solution contacting with the precipitate containing the nutrient salt is adjusted to a range of 5,6 to 7,0 to dissolve at least a portion of the calcium compound other than hydroxyapatite in the precipitate and increase a hydroxyapatite content in the precipitate, wherein the method further includes, prior to the inactivating step, a water addition step in which additional water is added to the used absorbent article and the superabsorbent polymer in the used absorbent article is made to further absorb water.

2. The method according to claim 1, wherein in the water addition step, 3 to 50 liter of water is added per 1 kg of the used absorbent article.

3. The method according to claim 1, wherein the water addition step is a step of immersing the used absorbent article in water.

4. The method according to any one of claims 1 to 3, wherein in the separating step, a sieve with a mesh opening of 50 to 300 $\mu$m is used, and at least a portion of the inactivated superabsorbent polymer is separated as the first fraction.

5. The method according to any one of claims 1 to 4, wherein an oxidizing agent that disintegrates the superabsorbent polymer is not added before the separating step.

6. The method according to any one of claims 1 to 5, wherein the pH during the concentration step is in a range of 5,7 to 6,3.

**Patentansprüche**

1. Verfahren zum Rückgewinnen eines aus Urin abgeleiteten Nährsalzes aus einem benutzten absorbierenden Artikel, der Urin enthält, wobei das Verfahren beinhaltet:

einen Inaktivierungsschritt, wobei ein benutzter absorbierender Artikel in eine wässrige Lösung eingetaucht wird, die eine Calciumverbindung enthält, um ein superabsorbierendes Polymer zu inaktivieren,

einen Trennschritt, wobei ein Sieb verwendet wird, um eine Fest-Flüssig-Mischung, die dem Inaktivierungsschritt unterzogen wurde, in eine erste Fraktion, die Bestandsmaterialien des absorbierenden Artikels enthält, und eine zweite Fraktion, die eine wässrige Lösung enthält, die eine Calciumverbindung und ein Nährsalz enthält, zu trennen, oder wenn ein Niederschlag, der das Nährsalz enthält, in dem Inaktivierungsschritt erzeugt wurde, in eine zweite Fraktion zu trennen, die eine wässrige Lösung, die die Calciumverbindung und das Nährsalz enthält, und den Niederschlag enthält, der das Nährsalz enthält, der durch das Sieb passiert wurde,

einen Ausfällungsschritt, wobei ein Niederschlag, der das Nährsalz enthält, mithilfe eines HAP-Verfahrens erzeugt wird, wobei das HAP-Verfahren ein Verfahren zum Rückgewinnen von Phosphor unter Nutzung des Phänomens der Kristallisation von Hydroxyapatit ($Ca_{10}(PO_4)_6(OH)_2$), das durch eine Reaktion zwischen $PO_4^{3-}$, $Ca^{2+}$ und $OH^-$ in Lösung erzeugt wird, und

einen Konzentrationsschritt, wobei ein pH-Wert einer wässrigen Lösung, die mit dem Niederschlag in Kontakt gelangt, der das Nährsalz enthält, auf einen Bereich von 5,6 bis 7,0 eingestellt wird, um zumindest einen Teil der Calciumverbindung mit Ausnahme des Hydroxyapatits in dem Niederschlag zu lösen und einen Hydroxyapatitgehalt in dem Niederschlag zu erhöhen, wobei das Verfahren vor dem Inaktivierungsschritt ferner einen Wasserzugabeschritt beinhaltet, wobei zusätzliches Wasser zu dem benutzten absorbierenden Artikel zugegeben wird und das superabsorbierende Polymer in dem benutzten absorbierenden Artikel mehr Wasser absorbieren gelassen wird.

2. Verfahren nach Anspruch 1, wobei in dem Wasserzugabeschritt 3 bis 50 Liter Wasser pro 1 kg des benutzten absorbierenden Artikels zugegeben wird.

3. Verfahren nach Anspruch 1, wobei der Wasserzugabeschritt ein Schritt des Eintauchens des benutzten absorbierenden Artikels in Wasser ist.

4. Verfahren nach einem der Ansprüche 1 bis 3, wobei im Trennschritt ein Sieb mit einer Maschenweite von 50 bis

300 μm verwendet wird und zumindest ein Teil des inaktivierten superabsorbierenden Polymers als erste Fraktion abgetrennt wird.

**5.** Verfahren nach einem der Ansprüche 1 bis 4, wobei ein Oxidationsmittel, das das superabsorbierende Polymer zersetzt, nicht vor dem Trennschritt zugegeben wird.

**6.** Verfahren nach einem der Ansprüche 1 bis 5, wobei der pH-Wert während des Konzentrationsschritts in einem Bereich von 5,7 bis 6,3 liegt.

**Revendications**

**1.** Méthode de récupération de sel nutritif dérivé d'urine contenu dans un article absorbant usagé qui comprend de l'urine, la méthode comprenant :

une étape d'inactivation au cours de laquelle un article absorbant usagé est immergé dans une solution aqueuse contenant un composé de calcium pour inactiver un polymère superabsorbant,
une étape de séparation au cours de laquelle un tamis est utilisé pour séparer un mélange solide-liquide qui a été soumis à l'étape d'inactivation, en une première fraction contenant des matériaux constitutifs de l'article absorbant et une seconde fraction contenant une solution aqueuse contenant un composé de calcium et un sel nutritif, ou, en cas de production d'un précipité contenant un sel nutritif au cours de l'étape d'inactivation, en une seconde fraction contenant une solution aqueuse contenant le composé de calcium et un sel nutritif et le précipité contenant le sel nutritif qui a traversé le tamis,
une étape de précipitation au cours de laquelle un précipité contenant le sel nutritif est produit par une méthode HAP, la méthode HAP étant une méthode de récupération de phosphore utilisant le phénomène de cristallisation de l'hydroxyapatite ($Ca_{10}(PO_4)_6(OH)_2$) produite par la réaction entre $PO_4^{3-}$, $Ca^{2+}$ et $OH^-$ en solution, et
une étape de concentration au cours de laquelle le pH d'une solution aqueuse en contact avec le précipité contenant le sel nutritif est ajusté à une plage de 5,6 à 7,0 pour dissoudre au moins une partie du composé de calcium autre que l'hydroxyapatite dans le précipité et augmenter une teneur en hydroxyapatite dans le précipité, dans laquelle la méthode comprend en outre, avant l'étape d'inactivation, une étape d'addition d'eau au cours de laquelle de l'eau supplémentaire est ajoutée à l'article absorbant usagé et le polymère superabsorbant dans l'article absorbant usagé est amené à absorber encore de l'eau.

**2.** Méthode selon la revendication 1, dans laquelle, au cours de l'étape d'addition d'eau, 3 à 50 litres d'eau sont ajoutés par 1 kg de l'article absorbant usagé.

**3.** Méthode selon la revendication 1, dans laquelle l'étape d'addition d'eau est une étape d'immersion de l'article absorbant usagé dans de l'eau.

**4.** Méthode selon l'une quelconque des revendications 1 à 3, dans laquelle, au cours de l'étape de séparation, un tamis ayant une ouverture de maille de 50 à 300 μm est utilisé, et au moins une partie du polymère superabsorbant inactivé est séparé comme la première fraction.

**5.** Méthode selon l'une quelconque des revendications 1 à 4, dans laquelle un agent oxydant qui désintègre le polymère superabsorbant n'est pas ajouté avant l'étape de séparation.

**6.** Méthode selon l'une quelconque des revendications 1 à 5, dans laquelle le pH pendant l'étape de concentration se situe dans une plage de 5,7 à 6,3.

## FIG. 1

P and Ca concentrations in solid phase
(dashed line = measured, solid line = calculated)

## FIG. 2

P and Ca concentrations in liquid phase
(dashed line = measured, solid line = calculated)

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015182246 A
- JP 2014177399 A
- JP 2015211941 A
- JP 2013150977 A